# EUROPEAN PATENT SPECIFICATION

(11) **EP 3 423 425 B1**
(45) Date of publication and mention of the grant of the patent: **25.03.2026**
(21) Application number: 17759034.6
(22) Date of filing: 28.02.2017
(51) Int. Cl.: C05G 3/50, C05G 1/00, C05G 5/30, C05D 9/00, C05D 11/00, C05G 5/00, C05B 7/00, B01J 2/00, B01J 2/16

(54) **SPRAY COATED FERTILIZER COMPOSITION**
SPRÜHBESCHICHTETE DÜNGEMITTELZUSAMMENSETZUNG
COMPOSITION D'ENGRAIS REVÊTUE PAR PULVÉRISATION

(30) Priority: 29.02.2016 US 201662301239 P; 08.11.2016 US 201662419283 P
(43) Date of publication of application: 09.01.2019
(73) Proprietor: Sulvaris Inc., Calgary, AB T2H 1J5 (CA)
(72) Inventor: IYER, Satish, Calgary, Alberta T2H 1J5 (CA); PEDERSEN, Eric, Calgary, Alberta T2H 1J5 (CA); KNOLL, Richard, Calgary, Alberta T2H 1J5 (CA); AJIBOYE, Babasola, Calgary, Alberta T2H 1J5 (CA); FLEGEL, Mitchel, Calgary, Alberta T2H 1J5 (CA)
(74) Representative: Wilson Gunn
(86) International application number: PCT/CA2017/050260
(87) International publication number: WO 2017/147695

(56) References cited:
- EP-A1- 2 583 955
- CN-A- 105 218 242
- US-A- 5 653 782
- US-A1- 2006 084 573
- US-A1- 2006 144 108
- US-A1- 2011 302 975
- US-A1- 2016 235 093
- US-B1- 6 749 659

## Description

### Field of the Invention

The present invention relates to fertilizer compositions and more specifically to fertilizer formed by spray coating granules.

### Background

Plants require primary macronutrients for vigorous growth as well as secondary macronutrients and micronutrients. Primary macronutrients include carbon, hydrogen, oxygen, nitrogen, phosphorus and potassium. Secondary macronutrients include calcium, sulphur and magnesium, and are generally required in smaller quantities than primary macronutrients. Micronutrients are required in very small quantities, and include zinc, calcium, magnesium, manganese, iron, copper, molybdenum, selenium, boron, chlorine, cobalt and sodium.

Any fertilizer which includes elemental sulphur is desirable if the majority of the sulphur oxidizes to the plant available sulphate form in the season of application. Examples of fertilizers comprising elemental sulphur can be found in patent literature documents US 6749659 B1 , US 2011/0302975 A1, US 2006/0144108 A1, EP 2583955 A1, US 5653782 A and CN 105 218 242 A . However, sulphur oxidizes slowly in the soil because it is dependent upon microbial colonization and activity. Oxidation rates increase if the sulphur particles are smaller because of the increased surface area available for microbial colonization. Hence, it is desirable to use micronized sulphur particles.

Macro- and micronutrients are typically supplemented in soil using solid fertilizer particles formed by methods of granulation, pelletization or compaction. Granulation is typically accomplished with granulators well known in the art, including spray dry granulators, drum granulators, paddle mixers (pug mills), fluidized beds, pellet mills or pan granulators. For example, a fertilizer mixture may be fed and distributed on a rolling bed of material in a drum granulator. Water and/or steam can be fed to the granulator to control the temperature and moisture of the granulation process. Granules are then dried and screened, with oversize granules and undersized material (so-called off-spec fines) recycled back to the granulator. The oversize material may be crushed or ground first before being fed back into the granulator. The undersized and crushed oversized material provides seed particles to spur granule formation in the granulator and form the recycle stream to the granulator.

There is a need in the art for alternative methods of producing a fertilizer composition comprising a primary fertilizer and micronized sulphur.

### Summary of the Invention

In one aspect, the invention comprises a fertilizer composition comprising a seed particle and a coating layer comprising a soluble primary macronutrient fertilizer and micronized sulphur particles. The seed particle comprises a primary macronutrient fertilizer, and may also comprise micronized sulphur particles. The seed particle may be a solid in any desired shape or size, and may be formed by any suitable method such as granulation or compaction.

In one embodiment, the seed particle may comprise urea, MAP, DAP, micronized sulphur, potash or mixtures thereof. The coating layer comprises micronized sulphur and urea, MAP, DAP, potash or mixtures thereof. The coating layer primary macronutrient composition is different from the seed particle primary macronutrient composition.

In one embodiment, the composition may comprise a dispersant in the seed particle or the coating layer, or both. The dispersant may comprise an anionic, cationic, amphoteric, or non-ionic surfactant, or mixtures thereof.

In one embodiment, the micronized sulphur particles may have an average diameter of less than about 30 microns, and preferably less than about 10 microns.

In another aspect, the invention is a method of producing a solid fertilizer particle comprising the steps of spray coating a seed particle with a sprayable suspension comprising micronized sulphur particles dispersed in a solution of a primary macronutrient fertilizer, to form a coating layer on the seed particle, and drying the coating layer to form a crust of dried primary macronutrient fertilizer within which micronized sulphur particles are dispersed.

The seed particle itself comprises a fertilizer material. The seed particle is preferably used to form a bed in a coating apparatus such as a rotating drum, pan granulator or fluidized bed granulator, and the bed is continuously agitated by mechanical or fluid means. Preferably, the seed particle is heated by using hot air to heat the bed material to a desired temperature.

Preferably, the sprayable suspension may be heated in order to achieve higher concentration of soluble materials in the solution before being spray coated. In one embodiment, the sprayable suspension may be sprayed through a nozzle configured in the coating apparatus so as to efficiently coat the seed particles in the moving bed.

### Brief Description of the Drawings

Figure 1 shows a schematic representation of one example of a fertilizer plant implementing a method of the present invention.
Figure 2 is a schematic representation of an alternative example of a fertilizer plant implementing a method of the present invention.

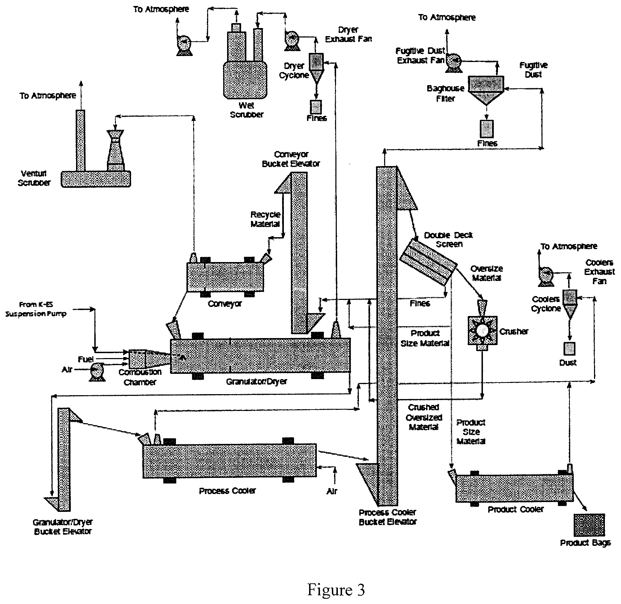

Figure 3 is another schematic representation of another alternative example of a fertilizer plant implementing a method of the present invention.

### Detailed Description

All other terms and phrases used in this specification have their ordinary meanings as one of skill in the art would understand. Such ordinary meanings may be obtained by reference to technical dictionaries, such as Hawley's Condensed Chemical Dictionary 14th Edition, by R.J. Lewis, John Wiley & Sons, New York, N.Y., 2001.

References in the specification to "one embodiment", "an embodiment", etc., indicate that the embodiment described may include a particular aspect, feature, structure, or characteristic, but not every embodiment necessarily includes that aspect, feature, structure, or characteristic. Moreover, such phrases may, but do not necessarily, refer to the same embodiment referred to in other portions of the specification. Further, when a particular aspect, feature, structure, or characteristic is described in connection with one embodiment, it is within the knowledge of one skilled in the art to combine, affect or connect such aspect, feature, structure, or characteristic with any other embodiments, whether or not explicitly described. In other words, any element or feature may be combined with any other element or feature in different embodiments, unless there is an obvious or inherent incompatibility between the two, or it is specifically excluded.

As used herein, a "fertilizer material" is any substance which includes any one of a primary macronutrient, secondary macronutrient or a micronutrient, or combinations thereof.

In general terms, the invention comprises a fertilizer composition comprising a seed particle spray coated with a fertilizer material. The seed particle is preferably a fertilizer material, and the coating may comprise the same or a different fertilizer material. In one embodiment, the seed particle is a solid in any desired shape or size, and may be formed by granulation, compaction or pelletization.

In general terms, one embodiment of a method of the present invention comprises the steps of:
(a) producing a seed particle, which may comprise a primary or a secondary macronutrient fertilizer or a micronutrient, or combinations thereof;
(b) preparing a sprayable suspension comprising a solution of a fertilizer material in a liquid medium such as water, a suspended insoluble fertilizer material, and a dispersant; and
(c) using the sprayable suspension to spray coat a layer onto the seed particle.

The sprayable suspension is preferably in the form of finely divided solid fertilizer particles well dispersed in a solution of a primary fertilizer material. The soluble fertilizer material may serve as a binding agent for the insoluble materials and helps to form hard granules when the coating is formed. Additionally, or alternatively, binding agents could be added into the sprayable suspension to help form a cohesive coating layer, and to assist in adhering the spray coated layer to the seed particle.

In one embodiment, the sprayable suspension may be formed by dissolving the fertilizer material in an aqueous dispersion of the insoluble fertilizer material. For example, the insoluble fertilizer material may comprise micronized elemental sulphur, formed by a method such as that described in co-owned U.S. Patent Nos. 8,679,446 and 9,278,858. In general terms, up to 85 % (wt.) molten sulphur is added to superheated water, and maintained above the melting point of sulphur with a dispersant in a concentration of about 0.01% to about 5.0% (wt.). The mixture is then blended or agitated to form a fine emulsion of sulphur in water. Rapid cooling of the emulsion results in solidification of the sulphur, which remains suspended in the dispersant solution, forming a solid/water suspension of micronized sulphur. After solidification of the micronized sulphur, the dispersant may remain in solution and assists in preventing agglomeration or aggregation of the sulphur particles. The micronized sulphur in this solid/water suspension may then be separated from the dispersant solution to produce sulphur particles coated with a layer of dispersant. These sulphur particles may then be re-suspended and additional dispersant solution may be added if needed and directly used in the next step of the present method as the solid/water suspension. In one embodiment, the solid/water suspension of micronized sulphur which results from the micronization step may be directly used in the next step of the present invention, without first separating the sulphur particles from the dispersant solution.

The dispersant may be a naphthalene sulfonate compound such as that found in Morwet^{™} or carboxymethylcellulose (CMC), or any surfactant which aids in keeping the molten sulphur in a highly dispersed state prior to solidification. The dispersant may be an anionic, cationic, amphoteric, or non-ionic surfactant, or combinations thereof. Suitable anionic surfactants include, but are not limited to, lignin derivatives such as lignosulphonates, aromatic sulphonates and aliphatic sulphonates and their formaldehyde condensates and derivatives, fatty acids/carboxylates, sulphonated fatty acids and phosphate esters of alkylphenol-, polyalkyleryl- or alkyl- alkoxylates. Suitable cationic surfactants include, but are not limited to, nitrogen-containing cationic surfactants. In one embodiment, the dispersant comprises a non-ionic surfactant. Suitable non-ionic surfactants include, but are not limited to, alkoxylated fatty alcohols, alkoxylated fatty acids, alkoxylated fatty ethers, alkoxylated fatty amides, alcohol ethoxylates, nonylphenol exthoxylates, octylphonel ethoxylates, ethoxylated seed oils, ethoxylated mineral oils, alkoxylated alkyl phenols, ethoxylated glycerides, castor oil ethoxylates, and mixtures thereof.

The soluble fertilizer material is then dissolved or partially dissolved into the solid/water suspension of micronized sulphur to create the sprayable suspension used as the coating mixture. In one embodiment, the solid/water suspension of micronized sulphur comprising the dispersant is heated to a temperature below the melting point of sulphur, in order to dissolve more soluble fertilizer materials or to increase the rate of dissolution. The heated suspension may also help in drying the resulting granules more quickly.

The sprayable suspension may be applied using any conventional coating method and equipment, such as a rotating drum, pan granulator or a fluidized bed. Any equipment which maintains a constantly moving bed of solid particles will encourage the relatively uniform application of a spray coating. In one embodiment, the seed particle is preferably used to form a bed in a coating apparatus such as a rotating drum, pan granulator or fluidized bed granulator, and the bed is continuously agitated by mechanical or fluid means. Preferably, the seed particle is heated by using hot air with the bed material to a desired temperature.

The sprayable suspension comprising the soluble and insoluble fertilizer materials is then sprayed through a nozzle so as to efficiently coat the seed particles in the moving bed. Heat may be applied simultaneously though the moving bed to evaporate the solvent and dry the granules.

In one embodiment, the sprayable suspension is applied in the form of a fine spray over the seed particle which, when dried, leaves behind a hard crust of the dissolved fertilizer material and embeds the suspended insoluble fertilizer material carried in the sprayable suspension. Preferably, the seed particle is kept in constant motion and movement so as to make the coating process more uniform and repeatable. The sprayable suspension initially impinges on and adheres to the surface of the seed particle thus depositing and building over it, and continues to grow the resulting coated seed particle into a larger granule. The coating process may continue until the granule reaches a desired size corresponding to a desired nutrient N, P, K, S (nitrogen, phosphorus, potassium and sulphur) analysis.

The rate of granule growth can be controlled by controlling the process conditions such as the flow rate and concentration of the solution and suspension and the residence time of the granule in the coating phase.

In the case of a rotating drum, spray nozzles may be located close to the bed of seed particle at the bottom of the drum. Nozzle location may be chosen to keep the spray carry over to a minimum and ensure the spray is well spread out and not focused over a small area. The spray nozzles may be oriented in any direction that aids a uniform coating of the sprayable suspension and prevents the nozzles from getting plugged. The drum may optionally include agitating blades to assist turning over the bed of solid particles.

In the case of a fluidized bed, spray nozzles may be located inside the bed of seed particle in order to avoid or minimize carry over to the baghouse. Higher air velocities in a fluidized bed results in a higher fraction of carry over if the nozzles are located outside the bed. Orienting the nozzles suitably, for instance horizontally with a slight downward incline, may avoid plugging of the distribution plate and choking of the nozzle hole due to solid deposition.

The seed particle may be obtained from any commonly practiced manufacturing process such as compaction, granulation, pelletization, grinding, crystallization, fluidization or the like, and the resulting seed particles may comprise any shape or form as desired. The choice of final shape and size of the final product granules may determine the shape and size of the seed particle which in turn could influence the manufacturing process for the seed particle.

In one embodiment, the over- and undersized material from the process recycle stream may be recycled back and used to form the seed particle or incorporated into the seed particle. Accordingly, the seed particle may comprise all the ingredients of the finished product granule, including the micronized elemental sulphur. This may produce a granule with two distinct layers, but with similar ingredients dispersed throughout.

The seed particle comprises a primary macronutrient or a combination of any primary or secondary macronutrient, micronutrient or inert material. The seed particle may also comprise pesticide impregnated materials. The macronutrient fertilizer may comprise muriate of potash (MOP), sulfate of potash (SOP), urea, monoammonium phosphate (MAP), diammonium phosphate (DAP), calcium dihydrogen phosphate or monocalcium phosphate, ammonium sulfate, ammonium nitrate, or combinations thereof. In addition, the seed particle may comprise elemental sulphur, preferably in a micronized form. In addition, none, one or a combination of micronutrients or secondary nutrients such as zinc, calcium, magnesium, boron, iron, copper, manganese, molybdenum, sodium, cobalt, chlorine, or selenium can be added into the mix to be incorporated into the seed particle. In one embodiment, the seed particle may be devoid of fertilizer material and simply comprise an inert carrier or a carrier impregnated with a herbicide or pesticide.

In one embodiment, the seed particle may comprise a combination of powdered potash (potassium chloride, potassium sulphate, and/or potassium nitrate) and micronized elemental sulphur which has been compacted to yield compacted seeds of mixed fertilizer. The sulphur-to-potash ratio in the seed particle can be varied from 0.1% to about 50% (wt.) or more.

In another embodiment, the seed particle may comprise ammonium phosphate (MAP and/or DAP) and micronized elemental sulfur. The sulphur to ammonium phosphate ratio in the seed particle may be varied from about 0.1% to about 50% (wt.) or more. For example, a mixture of MAP and micronized sulphur may be formed by adding the micronized sulphur prior to a preneutralizer or pipe-cross reactor with phosphoric acid and ammonia, or after the preneutralizer or pipe-cross reactor to the slurry of ammonium phosphate. This slurry, comprising ammonium phosphate particles and micronized sulphur particles may then be fed into a granulator as the sprayable suspension in the coating step.

The size of the seed particle can range from about US mesh 30 (0.60 mm) to about US mesh 5 (4.0 mm), and is preferably in range from about US mesh 12 (1.70 mm) to about US mesh 8 (2.8 mm), depending on the process conditions aiding the granular growth and the desired size of the coated product. The desired average granule diameter in the fertilizer industry is typically between 1 mm and 4 mm.

The sprayable suspension may comprise one or a combination of soluble and/or insoluble fertilizer materials in a liquid base. In one embodiment, the coating material may comprise a water soluble fertilizer material combined with an insoluble material. The insoluble material is preferably in a finely ground or micronized form. The spray coating liquid base is preferably water, and may preferably comprise a dissolved dispersant.

In one embodiment, the sprayable suspension may comprise dissolved urea in a concentration up to 95 wt% with respect to water, and micronized sulphur particles. The sulphur to urea ratio may be varied from about 0.1% to about 50% (wt.) or more, and could be added to form a sprayable suspension of micronized sulphur in an aqueous urea solution. This sprayable suspension may then be sprayed and dried over a seed particle to grow the granules to desired size and N, K, P, S analysis in a fluidized bed granulator.

The thickness of the spray coating may depend on the size of the seed particle and the desired size and N, P, K, S analysis of the final product. In one embodiment, the average thickness of the coating is preferably about 0.30 mm to about 0.63 mm, but may range between 0.1 mm to over 4 mm depending on the adhesive properties of the materials used in the seed and in the sprayable suspension.

The soluble material in the sprayable suspension may also act as a binder for the insoluble materials in the suspension. This allows the insoluble materials in suspension be embedded and to strongly adhere to the granule, thus adding to the required crush strength desired by the fertilizer industry.

In one embodiment, when using a rotary drum situation operating in a co-current or counter current manner, spray nozzles may be located close to the entry point of the seeds and the remaining section of the drum is used for thoroughly drying out the granules in the stream of hot air. The hot air temperature may be as high as possible, limited by the temperature sensitivity of the fertilizer materials and the granule, to increase the thermal efficiency. The granule size can be controlled by the drum speed and the dam-ring height. Typically, the spray section of the drum does not contain any flights. The drying section of the drum may preferably be equipped with flights to facilitate better contact for faster drying conditions.

In one embodiment, a fluidized bed may also be divided into at least a spray section and a drying section. Multiple spray sections may be provided to aid in larger production quantities and better maintain granular uniformity. Likewise, multiple drying sections may be provided for achieving uniform drying on larger throughput rates. The air velocity may be chosen based on the density, shape and size of the seed particle being fed into it. The fluidizing air temperature is preferably as high as possible in order to minimize the equipment costs, limited by the temperature sensitivity of the fertilizer materials and the granule. In some cases, the fertilizer may not be temperature sensitive but the larger granules could crack under the thermal gradient stress. A first section of the fluidized bed may comprise the coating section with the nozzles embedded within the bed of seed particle. A second downstream section of the bed may be utilized for drying out the solvent to obtain the dry product.

The coated and dried product produced by either using the rotary drum or fluidized bed situations may also be subjected to post treatment. In one embodiment, when using a rotary drum situation, an anti-dusting agent to help in dust control and product storage properties could be sprayed close to the discharge point of the granules or could be applied in a separate cooling drum. In another embodiment, when using the fluidized bed situation, a coating agent can be applied in the form of spray at the very end of the drying section, again by embedding the nozzles within the bed of solids in order to avoid carry over. In another embodiment, the coated and dried product may be glazed with either water or a soluble solution of a fertilizer material to increase the crush strength of the product.

The concentration of the solute in the sprayable suspension affects granule growth rate. Higher concentration of the solute helps in growing the granules faster, thus lowering the residence time and reducing the energy input to evaporate the solvent which leads to smaller and economical equipment design. Higher air temperature helps reduce the mass of air flow thereby increasing the heat efficiency of the system, but the air flow should be balanced with respect to the air fluidization velocity required to maintain good bed expansion and effective fluidization. Conventional urea plants employ a fluidized bed granulation process for mass production. In such cases the existing fluidized bed may be modified and retro-fitted for facilitating coating the urea-sulphur sprayable suspension over urea granules.

The exhaust air from the fluidized beds may be led to a cyclone or baghouse in order to clean the air before being discharged to atmosphere. The collected dust may be recycled back to an earlier point in the process such as the suspension tank or seed particle.

Thus a single finished product granule could comprise single or multiple fertilizer materials, all in the desired combination and proportions as required for manufacturing different varieties of products to cater to the needs of various crops, soil and climatic conditions.

**Examples** - The following examples are intended solely to illustrate specific embodiments of the invention, and not to limit the claimed invention.

### Example 1 - Plant Schematic

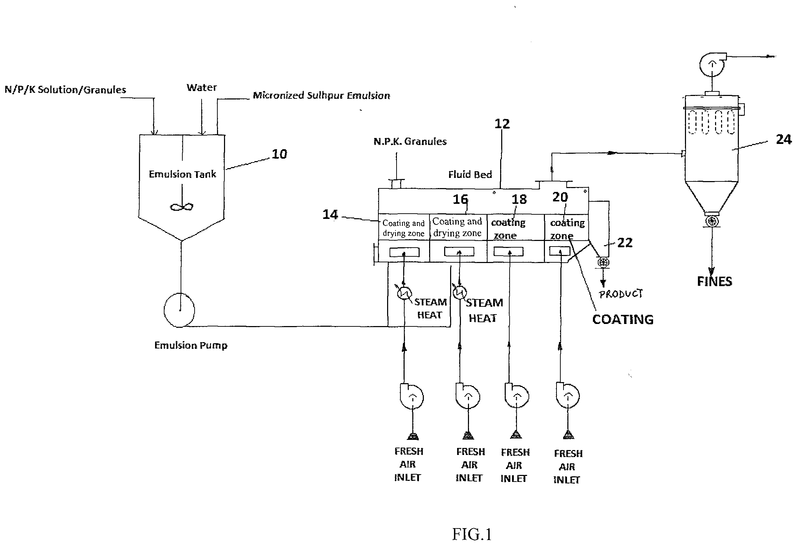

Figure 1 shows a schematic representation of a fertilizer production plant configured to implement a method descried herein and produce a fertilizer composition of the present invention. An emulsion mixing tank (10) mixes water, a nitrogen, phosphorus or potassium (N, P, or K) macronutrient fertilizer material which may be a concentrated solution, or solid granules, and either dry micronized sulphur particles or a solid/water suspension of micronized sulphur. The micronized sulphur particles having an average diameter preferably less than about 30 microns, and more preferably less than about 10 microns.

Seed particle in the form of N, P, or K (or mixtures thereof) granules are fed into a fluidized bed granulator (12), which comprises four zones, each of which is aerated to fluidize the particles. The seed particle first enters a first coating and drying zone (14) which uses hot air. The sprayable suspension is sprayed through nozzles into the first coating and drying zone (14). The particles migrate to the second coating and drying zone (16) which also uses hot air and also includes spray nozzles for introducing the sprayable suspension.

Spray coating, granule growth and drying of the granules takes place in the first two zones (14, 16). The particles then pass into a drying zone (18) and then to a cooling and coating zone (20), where a thin post treatment dust suppressant film coating can be applied. Vendible product is recovered from the product collector (22).

Air from the fluidized bed granulator (12) is collected in a baghouse (24) where suspended fines are filtered or separated and collected. Depending on their composition, the fines may be recycled to an earlier point in the process.

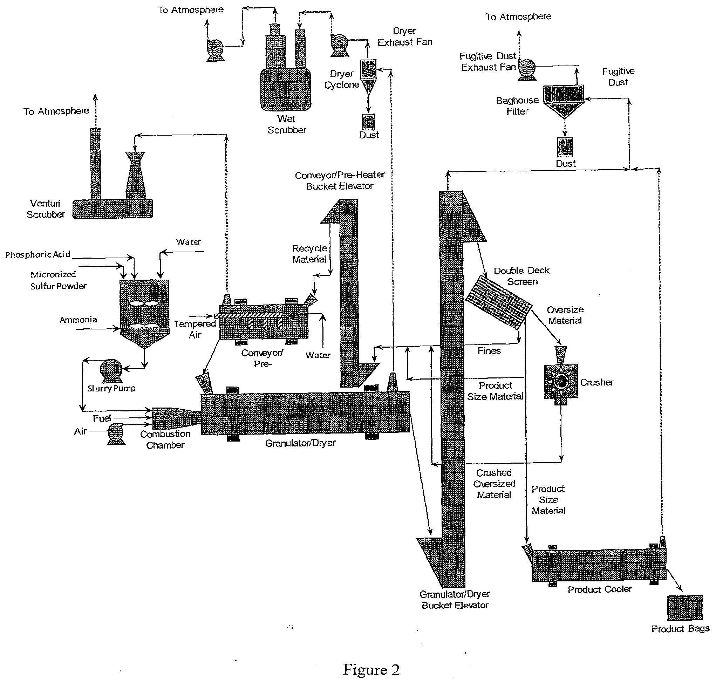

An alternative plant schematic is shown in Figure 2. A slurry of monoammonium phosphate and micronized sulphur in water is produced in a reactor (100) by reacting phosphoric acid and ammonia with the addition of micronized sulphur, to produce a sprayable suspension of dissolved MAP and suspended micronized sulphur. The sprayable suspension is then introduced into a granulator/dryer (110), along with heated air. Seed particle is introduced into the granulator/dryer (110), and the sprayable suspension is coated onto the seed particle and dried. The resultant granules are deposited into a bucket elevator (120) and then deposited onto a vibrating screen (130), used to select product in the range of 2.36-4.00 mm diameter. Product-sized material is then collected and cooled and packaged. Product may also receive a post treatment coating.

Oversize material from the screens is directed to a hammermill (140) or crusher and reduced to fine particles. Undersize fines are combined with the crushed oversized material and, optionally, a controlled fraction of product-sized material, and directed to a conveyor (150) where it is preheated and used as the seed particle in the granulator/dryer (110).

At all stages, dust control measures in the form of filters, dryer cyclones, wet scrubbers, and/or venture scrubbers are used to reduce or eliminate fugitive dust emissions.

### Example 2 - Production of Micronized Sulphur using Non-Ionic Surfactants

Suitable micronized sulphur may be produced using the methods described in co-owned U.S. Patent Nos. 8,679,446 and 9,278,858. Typically, the sulphur stock is heated to a temperature above the melting point of sulphur such that the sulphur stock melts and forms liquid sulphur. A dispersant solution is prepared with a specific concentration and heated to a temperature of about equal or higher to that of the liquid sulphur. The dispersant solution and liquid sulphur are then blended in a homogenizer to produce an emulsion of molten sulphur and dispersant solution. The sulphur emulsion is then cooled to solidify the sulphur and may then be used directly as a sprayable suspension, or may be separated and dried to leave a dry sulphur particle product, which may be used to form the seed particle or re-suspended and used as a sprayable suspension.

Table A shows examples of non-ionic surfactants used as dispersants for the production of micronized sulphur and particles size distribution, where PSD D50 is the value of particle diameter at 50% in the cumulative distribution and PSD D95 is the value of the particle diameter at 95% in the cumulative distribution. Table B further shows the suitable concentration range for Triton X-405, a non-ionic surfactant. Table B also shows examples of dispersants comprising a co-surfactant situation using an anionic and non-ionic surfactant.

| **Table A: Particle size distribution of various non-ionic surfactants** | | | | |
|---|---|---|---|---|
| **Manufacturer** | **Surfactant** | **Concentration (wt%)** | **PSD D50 (um)** | **PSD D95 (um)** |
| Dow | Ecosurf (Tergitol EH-6) | 2.50% | 15.24 | 34.22 |
| Dow | Triton X405 | 3.00% | 6.71 | 27.75 |
| Dow | Triton X-100 | 3.00% | 14.52 | 33.02 |
| Dow | Tamol SN | 3.00% | 6.48 | 13.64 |
| Stepan | Makon 10 | 3.00% | 11.75 | 41.99 |
| Stepan | Makon TD-12 | 3.00% | 12.55 | 42.83 |
| Stepan | Makon TSP-16 | 3.00% | 10.97 | 35.93 |
| Stepan | Polystep TSP-16 | 3.00% | 9.18 | 31.78 |
| Stepan | StepFac 8171 | 3.00% | 7.11 | 14.75 |

As may be seen, each non-ionic surfactant successfully produced micronized sulphur with a suitable particle size distribution.

| **Table B: Particle size distribution of various non-ionic surfactants** | | |
|---|---|---|
| **Surfactant** | **PSD50 (avg of 2 samples)** | **PSD95 (avg of 2 samples)** |
| 5% Triton X-405 | 8.86 | 31.85 |
| 3% Triton X-405 | 6.71 | 27.75 |
| 1.50% Triton X-405 | 7.02 | 16.6 |
| 1.00% Triton X-405 | 8.51 | 23.47 |
| 0.75% Triton X-405 | 9.04 | 24.89 |
| 0.50% Triton X-405 | 10.85 | 28.78 |
| 0.25% Triton X-405 | 10.37 | 25.38 |
| 0.15% Triton X-405 | 9.44 | 29.3 |
| 0.10% Triton X-405 | 11.79 | 31.43 |
| 0.05% Triton X-405 | 7.84 | 28.9 |
| 0.30% Trinton X-405 | 6.06 | 11.29 |
| 0.60% Morwet | | |
| 0.30% Triton X-405 | 15.24 | 38.36 |
| 1.80% Morwet | | |
| 0.30% Triton X-405 | 16.61 | 41.52 |
| 1.50% Morwet | | |

Suitable particle size distributions were produced at a wide range of surfactant concentrations.

### Example 3 - Production of MAP/Urea and Micronized Elemental Sulphur Granules by Fluidized Bed Granulation

Fertilizer material was produced which consisted of either urea granules or monoammonium phosphate (MAP) granules, coated with a mixture of solubilized urea or MAP and micronized elemental sulphur, which was produced as described in co-owned U.S. Patent Nos. 8,679,446 and 9,278,858. The urea or MAP granules had the size distribution shown in Table 1 below. The sulphur was micronized and had a PSD50 of about 7 microns.

**Table 1: Feed Material Properties**

| % Above Mesh Size | | | | | | | |
|---|---|---|---|---|---|---|---|
| | 5 | 6 | 7 | 8 | 10 | Loose Bulk Density (kg/m³) | Moisture Content (%) |
| | Microns | | | | | | |
| Sample | 4750 | 3350 | 2800 | 2360 | 2000 | | |
| Urea | 0.2 | 2.3 | 29.3 | 67.1 | 92.1 | 743 | 0.3 |
| MAP | 0.7 | 8.4 | 38.9 | 81.2 | 94.0 | 985 | 1.9 |
| Sulphur | - | - | - | - | - | 543 | 5.5 |

Urea and MAP particles, respectively were used as seed particle in separate trials. The sprayable suspension was a mixture of micronized elemental sulphur, dispersant (0.001% to 5.0% (wt%)), water, and either urea or MAP. Table 2 below shows the weight of material used in each run. The percentages are solid to water ratios. The soluble solids were in the range of 40% to 80% with respect to water and the insoluble sulphur was in the range of 10% to 24% with respect to the soluble fertilizer. This was done to achieve a desired a sulphur:urea and sulphur:MAP ratios.

**Table 2: Run Solutions Contents**

| Run # | Water (kg) | Sulphur (kg) | Urea (kg) | MAP (kg) | Total Wt. (kg) |
|---|---|---|---|---|---|
| **1** | 73 | 8 (10%) | 109 (60%) | 0 | 190 |
| **2** | 73 | 16 (14%) | 109 (60%) | 0 | 198 |
| **3** | 55 | 20 (14%) | 136 (70%) | 0 | 211 |
| **4** | 73 | 12 (24%) | 0 | 50 (40%) | 135 |
| **5** | 110 | 18 (24%) | 0 | 76 (40%) | 204 |

Urea or MAP was slowly added to water while a mixer stirred the contents at high speed. When the urea was mixed with water, the temperature of the solution would decrease significantly. The solution needed to be greater than about 70°C for the urea to dissolve, so the solution was heated using a mixing tank jacket and heat traced tubing to a temperature ranging from 85-93°C. To achieve a consistent suspension and to avoid lumping, the micronized elemental sulphur powder coated with a layer of dispersant was slowly added to the urea solution. The mixer rotor speed was increased as the sulphur was added because the sulphur thickened the solution, and the turbulence helped disperse any lumps.

The seed particle consisting of either urea or MAP and the sprayable suspension were fed to an FB 10 fluidized bed granulator with the conditions specified in Table 3. There were three runs of testing for the urea feed, and two runs of testing for the MAP feed.

**Table 3: Run Conditions**

| Run # | Feed Type | Solid Feed Rate (kg/hr) | Liquid Feed Rate (kg/hr) | Liquid Feed Temperature (°C) |
|---|---|---|---|---|
| **1** | Urea | 95 | 70 | 102 |
| **2** | Urea | 96 | 130 | 90 |
| **3** | Urea | 96 | 168 | 91 |
| **4** | MAP | 95 | 167 | 85 |
| **5** | MAP | 94 | 237 | 79 |

The sprayable suspension (liquid feed) addition was increased throughout run 2 in order to increase the size of the final granule product. Start-up of the system required preheating the material in the three zones by turning on the baghouse blower and the two fluid bed blowers. The air from the blowers was heated using hot generators fueled by natural gas. The beds were heated to about 70-90°C and once the bed temperature was heated, the solids (seed particle) feeder was turned on, and the sprayable suspension was added. One spray nozzle was employed in each section of the bed and the nozzles were embedded in the bed.

The FB-10 successfully spray coated the seed particles to increase granule particle size and produce a urea/micronized sulphur product or a MAP/micronized sulphur product. Samples of 5x8 Mesh (US Standard) product were taken for analysis during runs 2 through 5.

Table 4.1 and 4.2 below show the results of testing. Oversize product was +5 Mesh, on size product was 5x8 Mesh, and fines were -8 Mesh. Baghouse fines rates were taken for runs 3 and 5, and they were measured to be 6 and 2 kg/hr respectively. The residence time for runs 3 and 5 were 26 and 25 minutes respectively.

**Table 4.1: Test Results and Product Analysis**

| Run # | Feed Type | Moisture Content (%) | Loose Bulk Density (kg/m³) | Oversize Product Rate (kg/hr) | Onsize Product Rate (kg/hr) | Fines Product Rate (kg/hr) |
|---|---|---|---|---|---|---|
| **2** | Urea | 0.3 | 652 | 14 | 109 | 3 |
| **3** | Urea | 0.3 | 641 | 86 | 119 | 3 |
| **4** | MAP | 1.2 | 935 | 16 | 108 | 10 |
| **5** | MAP | 1.1 | 930 | 46 | 206 | 18 |

**Table 4.2: Product Analysis (cont.)**

| % Above Mesh Size | | | | | |
|---|---|---|---|---|---|
| | 5 | 6 | 7 | 8 | 10 |
| | Microns | | | | |
| Run # | 4750 | 3350 | 2800 | 2360 | 2000 |
| **2** | 0.1 | 15.4 | 68.4 | 97.4 | 99.9 |
| **3** | 1.4 | 32.3 | 76.6 | 97.4 | 99.9 |
| **4** | 0.2 | 15.1 | 66.7 | 95.4 | 99.7 |
| **5** | 0.3 | 20.9 | 66.2 | 94.3 | 99.9 |

Obviously, varying the concentration and the rate of the sprayable suspension in combination with the residence time in the fluidized bed affects the particle size of the product. The seed particle feed rate was kept consistent at 94 to 96 kg/hr during runs 2 through 5. Generally, there was an increase in granule size as the sprayable suspension feed rate was increased. The sprayable suspension feed rate in run 3 was increased to 119 kg/hr from 109 kg/hr in run 2. This resulted in an increase of 10 kg/hr on size urea/micronized sulphur product and 72 kg/hr oversize urea/micronized sulphur product. Similarly, when producing the MAP/micronized sulphur product, the sprayable suspension feed rate was increased from 167 kg/hr (run 4) to 237 kg/hr (run 5) and the rate of on size product increased by 98 kg/hr, whereas the rate of oversize product was increased by 30 kg/hr. Thus, increasing the liquid rate for processing MAP/micronized sulphur resulted in a 90% increase in the 5x8 Mesh product, while increasing the liquid rate for processing urea/micronized sulphur resulted in only a 9% increase in the 5x8 Mesh product yield. For the urea/micronized sulphur process the lower on size yield increase was partly due to a large increase in the oversize fraction.

Samples from all three product zones were taken during runs 2, 3, and 5. The moisture content for each bed zone was also analyzed and is presented in Table 5 below.

**Table 5: Run Conditions**

| Run # | Zone 1 (%) | Zone 2 (%) | Zone 3(%) |
|---|---|---|---|
| **2** | 0.7 | 0.4 | 0.3 |
| **3** | 0.9 | 0.7 | 0.4 |
| **5** | 1.5 | 1.0 | 1.0 |

Chemical analyses of the products were performed according to the Association of Official Analytical Chemists (AOAC) methods. The product samples were tested for total nitrogen, total P₂O₅, K₂O, total S, and moisture.

Chemical analyses of the resulting 5x8 Mesh phosphate/micronized sulphur product showed a total nitrogen of 11.7%, P₂O₅ of 46.6%, and total sulphur of 5.0%. Analysis of the 5+ Mesh phosphate/micronized sulphur product showed a total nitrogen of 11.1%, P₂O₅ of 50.3%, and total sulphur of 5.0%.

Chemical analyses of the resulting 5x8 Mesh urea/micronized sulphur product showed a total nitrogen of 44.1%, and total sulphur of 4.5%. Analysis of the 5+ Mesh urea/micronized sulphur product showed a total nitrogen of 43.0%, and total sulphur of 8.9%.

Physical properties tests were performed on the products according to the Manual for Determining Physical Properties of Fertilizer (IFDC-R-10). The selected physical properties determined were granule crushing strength (IFDC S115), and abrasion resistance (IFDC S116).

Granule crushing strength for the urea/micronized sulphur product ranged from 2.86 to 3.39 kg/granule. Granule crushing strength for the phosphate/micronized sulphur product ranged from 8.67 to 9.90 kg/granule. Abrasion resistance for both products met acceptable criteria.

A further trial consisting of urea granules mixed with micronized elemental sulphur was also completed using a higher concentration of urea in the sprayable suspension. The sprayable suspension in this trial was a mixture of urea and micronized elemental sulphur coated with a layer of dispersant in amounts shown in Table 6. The soluble urea was in the range of 85% to 95% with respect to water and the insoluble micronized elemental sulphur was in the range of 14% to 17% with respect to soluble urea.

**Table 6: Liquid Feed Batch Materials Ratios**

| Run # | Sulphur:Urea (%) | Urea:H₂O (%) | Total Wt. (kg) |
|---|---|---|---|
| **1** | 14 | 90 | 260 (571 lb) |
| **2** | 17 | 90 | 134 (295 lb) |
| **3** | 17 | 85 | 213 (468 lb) |

When blending the materials with a mixer, the temperature was maintained between 80-100°C to allow for the urea to dissolve. The seed particle and sprayable suspension were fed to an FB 10 fluidized bed granulator with the conditions specified in Table 7.

**Table 7: Run Conditions**

| Run # | Solid Feed Rate (kg/hr) | Liquid Feed Rate (kg/hr) | Liquid Feed Temperature (°C) | Nozzle Gas Inlet Temperature (°C) |
|---|---|---|---|---|
| **1** | 48 | 41 | 106 | 144 |
| **2** | 49 | 41 | 106 | 21 |
| **3** | 73 | 86 | 99-100 | 169 |

Table 8 shows the results of the testing. After running the process for approximately 1 hour, the product rate and recycle feed rate were nearly identical, allowing the pure urea feed as the seed particle to be replaced with the recycle feed. The last rate recorded for the recycle feed was 73 kg/hr, and 75 kg/hr for the 5x8 mesh product. Ideally, with the liquid feed rate at 91 kg/hr and a solids feed rate of 80 kg/hr, adjusting for the loss of moisture from drying in the Fluid Bed, the 5x8 mesh product rate and combined overs and fines rates would be 80 kg/hr each. Although the feed rate was allowed to stabilize, the process would need to be run for a longer period of time to allow for the recycle feed to consist of the same N, P, K, S analysis as the sprayable suspension to produce a homogeneous fertilizer product.

**Table 8: Test Results and Product Analysis**

| % Above Mesh Size | | | | | | | | | |
|---|---|---|---|---|---|---|---|---|---|
| Run | Sample | **4** | **5** | **6** | **8** | **10** | **12** | **20** | **Bulk Density** (g/cc) |
| | | **% Above Size in Microns** | | | | | | | |
| | | 4750 | 4000 | 3350 | 2360 | 2000 | 1700 | 850 | |
| **3** | 5x8 Mesh FB Product | 0 | 0.4 | 20.4 | 88.7 | 99.7 | - | 100.0 | *0.663* |
| **3** | 5x8 Mesh FB Product | 0 | 0.4 | 17.9 | 86.7 | 99.8 | - | 100.0 | 0.614 |
| **3** | Unscreened FB Product | 2.1 | 7.4 | 14.9 | 36.7 | 65.5 | - | 100.0 | 0.625 |
| **3** | Milled Overs +Recvcled | 0.3 | 0.5 | 0.8 | 1.7 | 16.9 | 54.8 | 99.9 | 0.710 |

Chemical analyses of the urea/micronized sulphur products were performed according to the Association of Official Analytical Chemists (AOAC) methods. The product samples were tested for total nitrogen, total P₂O₅, K₂O, total S, and moisture.

Chemical analyses of the resulting run #3 urea/micronized sulphur product showed a total nitrogen of 41.7% and total sulphur of 10.1%.

Physical properties tests were performed on the urea/micronized sulphur product according to the Manual for Determining Physical Properties of Fertilizer (IFDC-R-10). The selected physical properties determined were granule crushing strength (IFDC S115), and abrasion resistance (IFDC S116).

Granule crushing strength for the urea/micronized sulphur product ranged from 3.58 to 3.92 kg/granule. Abrasion resistance met acceptable criteria.

### Example 3 - Production of MAP and micronized sulphur granules by Drum Granulation

Fertilizer material consisting of MAP and micronized elemental sulphur was produced starting from phosphoric acid and ammonia as feedstock, and using a modified rotary drum-type dryer as granulating and drying equipment.

MAP particles were used as seed particle to start, but were replaced with the MAP/micronized sulphur recycle feed once the process stabilized the product rate and recycle feed. The sprayable suspension was produced in a preneutralizer which was loaded with merchant grade phosphoric acid and ammonia in a 1:1 molar ratio. Filtered and dried micronized sulphur coated with a dispersant was then added at about 15 wt% and 22 wt% with respect to MAP.

A sprayable suspension of dissolved MAP and micronized sulphur was then sprayed into the rotary drum to coat the seed particle as it was heated and dried. The rotary drum was divided into a feed/spray section and a drying section using an internal retaining dam. The feed/spray section was smooth, while the drying section used lifting flights to cascade the granules. Heated air was co-currently flowed through the rotary drum. The rotary drum was operated at a 2.0 degree angle of inclination, and the rotational speed was set to 12 rpm.

The granules from the rotary drum were transferred to a vibrating screen using a centrifugal bucket elevator. A 4 mm oversize and a 2.36 mm undersize screen yielded product in the desired size range. Oversize material was routed to a hammer mill, crushed and mixed with the undersize material, and recycled back to the feed section of the rotary drum as seed particle.

Sized product granules were cooled using co-current air flow and collected in bags. Some product was further dried in a rotary drum dryer.

Chemical analyses of the phosphate/micronized sulphur products were performed according to the Association of Official Analytical Chemists (AOAC) methods. The product samples were tested for total nitrogen, total P₂O₅, K₂O, total S, and moisture. Chemical analyses of the resulting phosphate/micronized sulphur product indicated a total nitrogen of 9.3%, P₂O₅ of 48.5%, and total sulphur of 13.8%. In a separate run the concentration of micronized sulphur was increased in the MAP/sulphur slurry and the nutrient analysis indicated total nitrogen of 8.4%, P₂O₅ of 43.0%, and total sulphur of 21.1%. With stabilization of the product rate and recycle feed over a period of time, the N, P, K, S analysis is expected to stabilize to produce a homogeneous fertilizer product that consists of the original wt% of micronized sulphur introduced into the process.

Physical properties tests were performed on the products according to the Manual for Determining Physical Properties of Fertilizer (IFDC-R-10). The selected physical properties determined were size analysis by dry sieving method (IFDC S107, Procedure 1), granule crushing strength (IFDC S115), and abrasion resistance (IFDC S116).

Size analysis of fertilizer products is defined as the particle diameter range of the material. It is typically measured by sieving, a process of separating a mixture of particles according to their size fraction. The size analyses performed on the product samples showed that all of the phosphate/micronized sulphur products screened had more than 98.2% of the granules retained between the 2.00 mm and 4.00 mm screens.

Granule crushing strength ranged from 0.67 to 2.57 kg/granule before a drying step, to 1.65 to 3.51 kg/granule after a drying step. Abrasion resistance met acceptable criteria.

### Example 4 - Production of Potash/micronized sulphur granules by Drum Granulation

Fertilizer material consisting of potash and micronized elemental sulphur was produced starting from potassium chloride and micronized elemental sulphur as feedstock, and using a modified rotary drum-type dryer as granulating and drying equipment.

Coarse potassium chloride particles (KCl) were used as seed particle to start, but were replaced with the KCl/micronized sulphur recycle feed once the process stabilized the product rate and recycle feed. The sprayable suspension consisted of a mixture of soluble KCl and 15% (wt.) micronized elemental sulfur. The KCl solution was kept above 95°C in order to keep the concentration of the KCl solution at a minimum of 34% K2O. The micronized sulphur suspension tank was equipped with an agitator in order to keep the sulfur well dispersed.

The granulation of the material occurred in the rotary drum-type dryer by spraying the KCl/micronized sulphur sprayable suspension into the granulator/dryer. The rotary drum-type dryer had a smooth section with a retaining dam for the first one-third of the dryer and the remaining two-thirds of the dryer had lifting flights. The material in the first third of the granulator/dryer formed a rolling bed with the suspension being sprayed over the top of the bed to form the granules. The sprayable suspension was sprayed into the granulator/dryer through a spray nozzle discharge located so that the slurry was sprayed onto the bed of material in the first section. The second section of the granulator/dryer containing the lifting flights created cascades of material that was dried using co-current airflow. A natural gas-fired combustion chamber was located at the inlet (material feed end) of the granulator/dryer. The operating temperature of the granulator/dryer was controlled indirectly by measuring the temperature of the granulator/dryer discharge material and adjusting the air-to-gas ratio of the combustion chamber to maintain the desired operating temperature. The granulator/dryer was operated at a 2.0 degree angle of inclination from the horizontal, and the rotational speed of the granulator/dryer was maximized at 12 revolutions per minute (rpm). The granulator/dryer was equipped with two hammer bands, each containing four hammers.

A cyclone-type dust collector was located in the exhaust air/gases duct between the granulator/dryer discharge and the granulator/dryer exhaust fan. The granulator/dryer fan exhausted into a wet scrubber and then into the atmosphere.

A centrifugal-type bucket elevator was used to transfer the material from the granulator/dryer discharge into a rotary drum-type process cooler. The process cooler was operated with a countercurrent airflow. A cyclone-type dust collector was located in the air exhaust duct between the process cooler air discharge and the exhaust fan. The process cooler was operated at a 2.0 degree angle of inclination from the horizontal.

The screen housing was fitted with a bonded square mesh-type oversize screen (4.0-millimeter [mm] opening) and a bonded square mesh-type undersize screen (2.36-mm opening) to yield a product with a size range of 2.36 to 4.00 mm. Oversize material from the screening system was routed to a hammer mill. The crushed material discharged from the hammer mill was returned (recycled) to the conveyor along with the undersize material from the screening system and a controlled fraction of the product-size material, when necessary, to maintain granulation control. The product-size fraction was fed to the product cooler which was operated at a rotational speed of 9 rpm. Product-size material was collected in bags.

The dust from the elevators, screening systems, product cooler, and conveyors was collected by the fugitive dust collection system. The gases from the process cooler passed through a cyclone-type dust collector located in the exhaust air/gases duct between the cooler discharge and the cooler exhaust fan before being exhausted to the atmosphere.

Chemical analyses of the potash/micronized sulphur products were performed according to the Association of Official Analytical Chemists (AOAC) methods. The product samples were tested for total nitrogen, total P₂O₅, K₂O, total S, and moisture.

Chemical analyses of each of the composite product samples indicated that total sulphur ranged from about 13.2% to about 15.0% and K₂O was 52.1% K₂O. With stabilization of the product rate and recycle feed over a period of time, the N, P, K, S analysis is expected to stabilize to produce a homogeneous fertilizer product that consists of the original wt% of micronized sulphur introduced into the process. The moisture content of all products analyzed was less than 0.1%.

Physical properties tests were performed on the potash/micronized sulphur products according to the Manual for Determining Physical Properties of Fertilizer (IFDC-R-10). The selected physical properties determined were size analysis by dry sieving method (IFDC S107, Procedure 1), granule crushing strength (IFDC S115), and abrasion resistance (IFDC S116).

Size analysis of fertilizer products is defined as the particle diameter range of the material. It is typically measured by sieving, a process of separating a mixture of particles according to their size fraction. The size analyses performed on the product samples showed that all of the products screened had more than 97.5% of the granules retained between the 2.00 mm and 4.00 mm screens.

Crushing strength is defined as the minimum force required to crush individual particles. Crushing strength is measured by applying pressure to individual granules - usually of a specified size range (-2.80 mm +2.36 mm) - and recording the pressure required to fracture each granule. Granule crushing strength is useful in predicting the expected handling and storage properties of a granule and the pressure limits applied during bag and bulk storage.

The average crushing strength of the potash/micronized sulphur products was between about 1.54 to about 2.35 kilograms per granule (kg/granule).

Abrasion resistance is the resistance to the formation of dust and fines and to granule fracturing as a result of granule-to-granule and granule-to-equipment contact during handling. Abrasion resistance is determined by measuring the percentage of dust and fines (percent degradation) created by subjecting a sample to abrasive-type action. The abrasion resistance for the two products tested was about between about 3.42% and 3.90% degradation.

### Definitions and Interpretation

The description of the present invention has been presented for purposes of illustration and description, but it is not intended to be exhaustive or limited to the invention in the form disclosed. Many modifications and variations will be apparent to those of ordinary skill in the art without departing from the scope of the invention which is defined by the claims. Embodiments were chosen and described in order to best explain the principles of the invention and the practical application, and to enable others of ordinary skill in the art to understand the invention for various embodiments with various modifications as are suited to the particular use contemplated.

It is further noted that the claims may be drafted to exclude any optional element. As such, this statement is intended to serve as antecedent basis for the use of exclusive terminology, such as "solely," "only," and the like, in connection with the recitation of claim elements or use of a "negative" limitation. The terms "preferably," "preferred," "prefer," "optionally," "may," and similar terms are used to indicate that an item, condition or step being referred to is an optional (not required) feature of the invention.

The singular forms "a," "an," and "the" include the plural reference unless the context clearly dictates otherwise. The term "and/or" means any one of the items, any combination of the items, or all of the items with which this term is associated.

The term "and/or" means any one of the items, any combination of the items, or all of the items with which this term is associated. The phrase "one or more" is readily understood by one of skill in the art, particularly when read in context of its usage.

As will be understood by the skilled artisan, all numbers, including those expressing quantities of reagents or ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

The term "about" can refer to a variation of ± 5%, ± 10%, ± 20%, or ± 25% of the value specified. For example, "about 50" percent can in some embodiments carry a variation from 45 to 55 percent. For integer ranges, the term "about" can include one or two integers greater than and/or less than a recited integer at each end of the range. Unless indicated otherwise herein, the term "about" is intended to include values and ranges proximate to the recited range that are equivalent in terms of the functionality of the composition, or the embodiment.

As will be understood by one skilled in the art, for any and all purposes, particularly in terms of providing a written description, all ranges recited herein also encompass any and all possible sub-ranges and combinations of sub-ranges thereof, as well as the individual values making up the range, particularly integer values. A recited range (e.g., weight percents or carbon groups) includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

As will also be understood by one skilled in the art, all language such as "up to", "at least", "greater than", "less than", "more than", "or more", and the like, include the number recited and such terms refer to ranges that can be subsequently broken down into sub-ranges as discussed above. In the same manner, all ratios recited herein also include all sub-ratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

## Claims

1. A method of producing a solid fertilizer particle, comprising the steps of spray coating a seed particle with a sprayable suspension comprising micronized sulphur particles dispersed in a solution of a primary macronutrient fertilizer, to form a coating layer on the seed particle, and drying the coating layer to form a crust of dried primary macronutrient fertilizer within which micronized sulphur particles are dispersed.

2. The method of claim 1 wherein the seed particle comprises;
a. a primary macronutrient fertilizer;
b. micronized sulphur particles mixed with a primary macronutrient fertilizer; or
c. urea, MAP, DAP, micronized sulphur, or potash or mixtures thereof.

3. The method of claim 1 or claim 2 wherein the spray coating step takes place in a rotary drum or a fluidized bed granulator.

4. The method of claim 3 wherein the sprayable suspension comprises the same primary macronutrient, or combination of macronutrients, as the seed particle.

5. The method of any one of claims 1 to 4 wherein the sprayable suspension is produced by emulsifying liquid sulphur in a dispersant solution, cooling the emulsion to produce a suspension of micronized sulphur, and dissolving the primary macronutrient into the suspension, and optionally wherein the dispersant comprises an anionic, cationic, amphoteric, or non-ionic surfactant, or mixtures thereof.

6. The method of claim 1 wherein the spray coated particles are screened to produce a product-sized portion, an oversize portion and an undersize portion, and further comprising the step of crushing the oversize portion and combining with the undersize portion to form seed particles, and recycling the seed particles to the spray coating step.

7. The method of any one of claims 1 to 6, wherein the fertilizer particle is post-treated to increase hardness and/or dust suppression.

8. The method of any one of claims 1 to 7, wherein a micronutrient is added to the seed particle, or the sprayable suspension, or both.

9. The method of any one of claims 1 to 8 wherein the micronized sulphur particles have an average diameter of less than about 30 microns.

10. The method of claim 2 wherein the sprayable suspension comprises a different primary macronutrient than the seed particle.

11. The method of any one of claims 7 to 10 wherein the fertilizer particle is coated with a dust suppressant coating and optionally is glazed with water or an aqueous solution of fertilizer material.

12. A fertilizer composition comprising a seed particle and a coating layer comprising micronized sulphur particles dispersed in a crust of a water-soluble primary macronutrient fertilizer, wherein the seed particle comprises a primary macronutrient fertilizer; the coating layer primary macronutrient comprises urea, MAP, DAP or potash or mixtures thereof, and the coating layer primary macronutrient composition is different from the seed particle primary macronutrient composition.

13. The composition of claim 12 further comprising a dispersant in the seed particle or the coating layer, or both; optionally wherein the dispersant comprises an anionic, cationic, amphoteric, or non-ionic surfactant, or mixtures thereof.

14. The composition of either of claims 12 or 13 further comprising a dust suppressant coating or a glaze and optionally a micronutrient in the seed particle or the coating layer or both.

15. The composition of any one of claims 12 to 14 wherein the micronized sulphur particles have an average diameter of less than about 30 microns.

## Patentansprüche

1. Verfahren zum Herstellen eines festen Düngemittelpartikels, umfassend die Schritte des Sprühbeschichtens eines Saatgutpartikels mit einer sprühbaren Suspension, die mikronisierte Schwefelpartikel umfasst, die in einer Lösung eines primären Makronährstoffdüngers dispergiert sind, um eine Deckschicht auf dem Saatgutpartikel zu bilden, und des Trocknens der Deckschicht, um eine Kruste aus getrocknetem primären Makronährstoffdünger zu bilden, in der mikronisierte Schwefelpartikel dispergiert sind.

2. Verfahren nach Anspruch 1 wobei das Saatgutpartikel umfasst;
(a) einen primären Makronährstoffdünger;
(b) mikronisierte Schwefelpartikel, die mit einem primären Makronährstoffdünger gemischt sind; oder
(c) Harnstoff, MAP, DAP, mikronisierten Schwefel oder Kali oder Mischungen davon.

3. Verfahren nach Anspruch 1 oder Anspruch 2, wobei der Sprühbeschichtungsschritt in einer Drehtrommel oder einem Wirbelschichtgranulator stattfindet.

4. Verfahren nach Anspruch 3, wobei die sprühbare Suspension denselben primären Makronährstoff oder eine Kombination von Makronährstoffen wie das Saatgutpartikel umfasst.

5. Verfahren nach einem der Ansprüche 1 bis 4, wobei die sprühbare Suspension durch Emulgieren von flüssigem Schwefel in einer Dispersionsmittellösung, durch Kühlen der Emulsion zum Herstellen einer Suspension von mikronisiertem Schwefel und Auflösen des primären Makronährstoffs in der Suspension hergestellt wird, und optional wobei das Dispersionsmittel ein anionisches, kationisches, amphoteres oder nichtionisches Tensid oder Mischungen davon umfasst.

6. Verfahren nach Anspruch 1, wobei die sprühbeschichteten Partikel gesiebt werden, um einen Teil in Produktgröße, einen Teil in Übergröße und einen Teil in Untergröße zu erzeugen, und das ferner den Schritt des Zerkleinerns des Teils in Übergröße und des Kombinierens mit dem Teil in Untergröße umfasst, um Saatgutpartikel zu bilden, und das Rückführen der Saatgutpartikel in den Sprühbeschichtungsschritt umfasst.

7. Verfahren nach einem der Ansprüche 1 bis 6, wobei das Düngemittelpartikel nachbehandelt wird, um eine Härte und/oder Staubunterdrückung zu steigern.

8. Verfahren nach einem der Ansprüche 1 bis 7, wobei dem Saatgutpartikel ein Makronährstoff oder die sprühbare Suspension oder beides hinzugefügt wird.

9. Verfahren nach einem der Ansprüche 1 bis 8, wobei die mikronisierten Schwefelpartikel einen mittleren Durchmesser von weniger als etwa 30 Mikrometer aufweisen.

10. Verfahren nach Anspruch 2, wobei die sprühbare Suspension einen anderen primären Makronährstoff wie das Saatgutpartikel umfasst.

11. Verfahren nach einem der Ansprüche 7 bis 10, wobei das Düngemittelpartikel mit einer Staubunterdrückungsschicht beschichtet ist und optional mit Wasser oder einer wässrigen Lösung von Düngemittelmaterial glasiert ist.

12. Düngemittelzusammensetzung, umfassend ein Saatgutpartikel und eine Deckschicht, die mikronisierte Schwefelpartikel umfasst, die in einer Kruste eines wasserlöslichen primären Makronährstoffdüngers dispergiert sind, wobei das Saatgutpartikel einen primären Makronährstoffdünger umfasst; der primäre Makronährstoff der Deckschicht Harnstoff, MAP, DAP oder Kali oder Mischungen davon umfasst und sich die Zusammensetzung des primären Makronährstoffs der Deckschicht von der Zusammensetzung des primären Makronährstoffs des Saatgutpartikels unterscheidet.

13. Zusammensetzung nach Anspruch 12, die ferner ein Dispersionsmittel in dem Saatgutpartikel oder der Deckschicht oder in beidem umfasst; optional wobei das Dispersionsmittel ein anionisches, kationisches, amphoteres oder nichtionisches Tensid oder Mischungen davon umfasst.

14. Zusammensetzung nach einem der Ansprüche 12 oder 13, die ferner eine Staubunterdrückungsschicht oder eine Glasur und optional einen Mikronährstoff in dem Saatgutpartikel oder der Deckschicht oder beidem umfasst.

15. Zusammensetzung nach einem der Ansprüche 12 bis 14, wobei die mikronisierten Schwefelpartikel einen mittleren Durchmesser von weniger als etwa 30 Mikrometer aufweisen.

## Revendications

1. Procédé de fabrication d'une particule d'engrais solide, comprenant les étapes consistant à enrober par pulvérisation une particule d'ensemencement avec une suspension pulvérisable comprenant des particules de soufre micronisées dispersées dans une solution d'un engrais à macronutriments primaires, pour former une couche d'enrobage sur la particule d'ensemencement, et sécher la couche d'enrobage pour former une croûte d'engrais à macronutriments primaires séchés à l'intérieur de laquelle sont dispersées des particules de soufre micronisées.

2. Procédé selon la revendication 1 dans lequel la particule d'ensemencement comprend ;
(a) un engrais à macronutriments primaires ;
(b) des particules de soufre micronisées mélangées à un engrais à macronutriments primaires ; ou
(c) de l'urée, du phosphate monoammonique (MAP), du Phosphate diammonique (DAP), du soufre micronisé, de la potasse ou des mélanges de ceux-ci.

3. Procédé selon la revendication 1 ou la revendication 2, dans lequel l'étape d'enrobage par pulvérisation a lieu dans un tambour rotatif ou un granulateur à lit fluidisé.

4. Procédé selon la revendication 3, dans lequel la suspension pulvérisable comprend le même macronutriment primaire, ou combinaison de macronutriments, que la particule d'ensemencement.

5. Procédé selon l'une quelconque des revendications 1 à 4, dans lequel la suspension pulvérisable est produite en émulsifiant du soufre liquide dans une solution dispersante, en refroidissant l'émulsion pour produire une suspension de soufre micronisé, et en dissolvant le macronutriment primaire dans la suspension, et éventuellement dans lequel le dispersant comprend un tensioactif anionique, cationique, amphotère ou non ionique, ou des mélanges de ceux-ci.

6. Procédé selon la revendication 1, dans lequel les particules enrobées par pulvérisation sont tamisées pour produire une portion de taille de produit, une portion de taille supérieure et une portion de taille inférieure, et comprenant en outre l'étape consistant à broyer la portion de taille supérieure et à la combiner avec la portion de taille inférieure pour former des particules d'ensemencement, et à recycler les particules de semence vers l'étape d'enrobage par pulvérisation.

7. Procédé selon l'une quelconque des revendications 1 à 6, dans lequel la particule d'engrais est post-traitée pour augmenter la dureté et/ou supprimer la poussière.

8. Procédé selon l'une quelconque des revendications 1 à 7, dans lequel un micronutriment est ajouté à la particule d'ensemencement, ou à la suspension pulvérisable, ou aux deux.

9. Procédé selon l'une quelconque des revendications 1 à 8, dans lequel les particules de soufre micronisées présentent un diamètre moyen inférieur à environ 30 microns.

10. Procédé selon la revendication 2, dans lequel la suspension pulvérisable comprend un macronutriment primaire différent de la particule d'ensemencement.

11. Procédé selon l'une quelconque des revendications 7 à 10, dans lequel la particule d'engrais est enrobée avec un enrobage suppresseur de poussière, et facultativement, est recouverte de glaçure avec de l'eau ou une solution aqueuse de matériau d'engrais.

12. Composition d'engrais comprenant une particule d'ensemencement et une couche d'enrobage comprenant des particules de soufre micronisées dispersées dans une croûte d'un engrais à macronutriments primaires hydrosoluble, dans laquelle la particule d'ensemencement comprend un engrais à macronutriments primaires ; le macronutriment primaire de la couche d'enrobage comprend de l'urée, du MAP, du DAP ou de la potasse ou des mélanges de ceux-ci, et la composition de macronutriments primaires de la couche d'enrobage est différente de la composition de macronutriments primaires de la particule d'ensemencement.

13. Composition selon la revendication 12, comprenant en outre un dispersant dans la particule d'ensemencement ou la couche d'enrobage, ou les deux ; facultativement, dans laquelle le dispersant comprend un tensioactif anionique, cationique, amphotère ou non ionique, ou des mélanges de ceux-ci.

14. Composition selon l'une quelconque des revendications 12 ou 13, comprenant en outre un enrobage suppresseur de poussière ou une glaçure, et éventuellement un micronutriment dans la particule d'ensemencement ou la couche d'enrobage ou les deux.

15. Composition selon l'une quelconque des revendications 12 à 14, dans laquelle les particules de soufre micronisées présentent un diamètre moyen inférieur à environ 30 microns.
